# EUROPÄISCHE PATENTSCHRIFT

(11) **EP 0 634 081 B1**
(45) Veröffentlichungstag und Bekanntmachung des Hinweises auf die Patenterteilung: **04.06.1997**
(21) Anmeldenummer: 93906445.7
(22) Anmeldetag: 25.03.1993
(51) Int. Cl.: H04Q 3/72, H04M 1/57

(54) **VERFAHREN ZUR RUFNUMMERNSIGNALISIERUNG IN EINEM FERNMELDENETZ**
METHOD OF SIGNALLING SUBSCRIBER NUMBERS IN A TELECOMMUNICATIONS NETWORK
PROCEDE DE SIGNALISATION DE NUMEROS D'ABONNES DANS UN RESEAU DE TELECOMMUNICATION

(30) Priorität: 30.03.1992 DE 4210407
(43) Veröffentlichungstag der Anmeldung: 18.01.1995
(73) Patentinhaber: SIEMENS AKTIENGESELLSCHAFT, 80333 München (DE)
(72) Erfinder: WILLE, Klaus, D-81679 München (DE); MARTIN, Karl-Heinz, D-81375 München (DE); KOFLER, Christian, D-81369 München (DE)
(86) Internationale Anmeldenummer: DE9300278
(87) Internationale Veröffentlichungsnummer: WO9320662

(56) Entgegenhaltungen:
- PATENT ABSTRACTS OF JAPAN vol. 6, no. 230 (E-142)16. November 1982 & JP-A-57132467
- CONFERENCE RECORD, IEEE GLOBAL TELECOMMUNICATIONS CONFERENCE,2-5 DEZ. 1985, BAND 3 SEITEN 1429-1433, NEW ORLEANS US - N. SHIGEMATSU ET AL 'The Advanced Network Service System'
- NTZ NACHRICHTENTECHNISCHE ZEITSCHRIFT Bd. 28, Nr. 7, Juli 1975, BERLIN DE Seiten 236-238 R.P. LORETAN 'Flexible Numbering of Telephones over whole Area with Dispersed Translators'
- GROUP DES INGENIEURS DU SECTEUR COMMUTATION DU CNET, BAND 2 "ELECTRONIC SWITCHING", 1983, TEIL 1 KAPITEL 2, ELSEVIER SCIENCE PUBLISHERS, AMSTERDAM NL Seiten 16 - 50 'The Telephone Network'
- BRITISH TELECOMMUNICATIONS ENGINEERING Bd. 8, Januar 1990, LONDON GB Seiten 225 - 231 N.A.C. MCLEOD 'Numbering in Telecommunications'

## Beschreibung

In Fernmeldenetzen bestehen zur Numerierung, das heißt zur Kennzeichnung von Teilnehmeranschlüssen, Vermittlungsstellen oder Netzbereichen, zwei Verfahren: die verdeckte und die offene Numerierung. Bei der verdeckten Numerierung wird die Kennzahl der Vermittlungsstellen mit der Ordnungsnummer der zugehörigen Teilnehmeranschlüsse zusammengefaßt, das heißt die Kennzahl der Vermittlungsstelle ist fester Bestandteil der Teilnehmerrufnummer, sie ist verdeckt darin enthalten. Bei der offenen Numerierung sind die Numerierungsbereiche des Netzes durch eine Ziffernfolge gekennzeichnet, die beim Verbindungsaufbau zwischen den Netzbereichen zusätzlich zu den Teilnehmerrufnummern zu wählen ist (Bergmann, Lehrbuch der Fernmeldetechnik, Band 1, 5. Auflage, Berlin 1986, Seite 206). Es sind auch heterogene Netze bekannt, in denen Rufnummern in einzelnen Bereichen offen und in anderen Bereichen verdeckt signalisiert werden.

In privaten und in öffentlichen ISDN-Netzen wird beim Verbindungsaufbau die Rufnummer des rufenden (A-) Teilnehmers zum gerufenen (B-) Teilnehmer signalisiert. Die Rufnummer des A-Teilnehmers wird zur Realisierung verschiedener Leistungsmerkmale benötigt, so unter anderem zur Rufnummernanzeige auf einem Display der empfangsseitigen (B-) Endeinrichtung, zum Rückruf im Freifall und zur Wahlwiederholung durch den B-Teilnehmer. In Netzen durchgängig offener Numerierung ist beim Aufbau einer Fernmeldeverbindung, die von einem Ursprungsknoten, über Transitknoten zu einem Zielknoten geführt wird, die A-Rufnummer um die Kennzahl der A-Endeinrichtung zu ergänzen. Diese Ergänzung ist beispielsweise erforderlich, damit auf dem Display der B-Endeinrichtung sämtliche Wählziffern angezeigt werden, die in die B-Endeinrichtung einzugeben sind, um die A-Endeinrichtung zu erreichen. Liegen dagegen der Ursprungsknoten und nachfolgende Knoten in einem Bereich verdeckter Numerierung, so ist im Ursprungsknoten die A-Rufnummer nicht um die Kennzahl des Ursprungsknotens bzw. die Kennzahl des Bereichs verdeckter Numerierung zu ergänzen.

Wird die Fernmeldeverbindung aus dem Bereich verdeckter Numerierung von dem Ursprungsknoten in einen Bereich offener Numerierung geführt, der beispielsweise aus einer Mehrzahl von Transitknoten besteht, so wird die Signalisierungsinformation der aufzubauenden Verbindung in jedem am Verbindungsaufbau beteiligten Knoten im Bereich der offenen Numerierung um eine knotenindividuelle Kennzahl ergänzt. Die Rufnummerninformation kann dabei in Abhängigkeit von der Anzahl der am Verbindungsaufbau beteiligten Knoten und in Abhängigkeit von der Ziffernanzahl der knotenindividuellen Kennzahlen neben dem endeinrichtungsindividuellen Rufnummernteil eine Vielzahl von Ziffern umfassen. Die Anzeige einer derart ergänzten Rufnummer setzt eine entsprechende Dimensionierung von Speichern voraus, auf die entsprechende Display-Steuerung zuzugreifen hat. Dabei ist zu berücksichtigen, daß beispielsweise für die Realisierung der Leistungsmerkmale "Rückruf im Freifall" und "Wahlwiederholung durch B-Teilnehmer" die Verwendung der um die Kennzahlen der am ursprünglichen Verbindungsaufbau beteiligten Knoten ergänzten Kennzahlen dazu führen würde, die folgende Verbindung über die Knoten zu führen, über die die ursprüngliche Verbindung geführt wurde. Dies wäre jedoch nur dann angemessen, wenn zum Zeitpunkt, zu dem die Folgeverbindung aufgebaut wird, das Netz keine verkehrsgünstigere Wegführung ermöglichen würde als zu dem Zeitpunkt, zu dem die ursprüngliche Verbindung aufgebaut wurde.

Die dargestellten Probleme beim Stand der Technik wären zu vermeiden, wenn von dem Bereich verdeckter Numerierung zu dem Zielknoten eine Leitung eingerichtet würde und die Verbindung über diese Leitung aufgebaut würde. Dies würde allerdings einen erheblichen Aufwand erfordern, insbesondere auch dann, wenn Ursprungs- und Zielknoten örtlich weit voneinander entfernt sind. Diese Möglichkeit scheidet praktisch dann aus, wenn Ursprungs- und Zielknoten in unterschiedlichen Kontinenten (Europa/USA) angeordnet sind.

Aus den Produktschriften der Fa. Siemens "Hicom 300 System Produkt Data", Ordering No. A19100-K3161-430-X-7600, Seiten 55/56 und "Private Kommunikationssysteme, Hicom schafft Verbindungen", Bestell-Nr. A19100-K3160-A302, Seite "Hicom 300 Networking" ist bereits ein Kommunikationssystem ("Hicom 300") bekannt, das einen Netzknoten in einem Bereich offener oder verdeckter Numerierung bilden kann. In einem derartigen Netz werden zu aufzubauenden Fernmeldeverbindungen Signalisierungsinformationen gebildet, in die eine den verdeckten (den Ursprungsknoten aufnehmenden) Bereich bezeichnende Kennzahl und die Rufnummer der sendeseitigen Fernmeldeendeinrichtung eingefügt werden. In den Signalisierungsinformationen wird die Rufnummer der sendeseitigen Fernmeldeendeinrichtung um Kennzahlen der am Verbindungsaufbau beteiligten Knoten ergänzt, so daß sich die vorstehend beschriebenen Nachteile ergeben.

Der Erfindung liegt die Aufgabe zugrunde, ein Verfahren zur Rufnummernsignalisierung anzugeben, das eine für eine empfangsseitige Fernmeldeendeinrichtung vereinfachte Auswertung ermöglicht.

Die Lösung dieser Aufgabe erfolgt erfindungsgemäß mit den Merkmalen des Patentanspruchs 1.

Ein Vorteil der erfindungsgemäßen Lösung ist zunächst darin zu sehen, daß die Hardware-Konfiguration des Netzes nicht zu verändern ist. Insbesondere ist zwischen Ursprungs- und Zielknoten keine Leitung bzw. kein Leitungsbündel zu installieren. Ein weiterer Vorteil der erfindungsgemäßen Lösung ist darin zu sehen, daß die in die Rufnummernsignalisierung eingebundenen Displaysteuerungen bzw. das ihnen zugeordnete Steuerungsprogramm und die die anzuzeigenden Informationen aufzunehmenden Speichereinrichtungen unverändert übernommen werden können.

Die Erfindung ist auch auf Netzstrukturen anwendbar, in denen Ursprungs- und Zielknoten in einem Bereich mit derselben Kennzahl angeordnet sind, wobei aber zwischen Ursprungs- und Zielknoten mindestens ein Bereich anderer Kennzahl angeordnet ist.

Die Erfindung wird nun anhand der Zeichnungen beschrieben. Es zeigt
Figur 1 ein heterogenes Netz mit Bereichen offener und Bereichen verdeckter Numerierung, in welchem die erfindungsgemäße Rufnummernsignalisierung erfolgt,
Figur 2 ein Netz, bei dem Ursprungs- und Zielknoten in einen Bereich derselben Kennzahl angeordnet sind, wobei zwischen Ursprungs- und Zielknoten mindestens ein Bereich anderer Kennzahl angeordnet ist,
Figur 3 ein Blockschaltbild eines Knotens in einem Netz nach Figur 1 oder 2,
Figur 4 Tabellen, die Knoten in dem Netz nach Figur 1 zugeordnet sind,
Figur 5 Tabellen, die Knoten in dem Netz nach Figur 2 zugeordnet sind, und
Figur 6 die Struktur der von Knoten nach den Figuren 1 bis 3 gebildeten Signalisierungsinformationen.

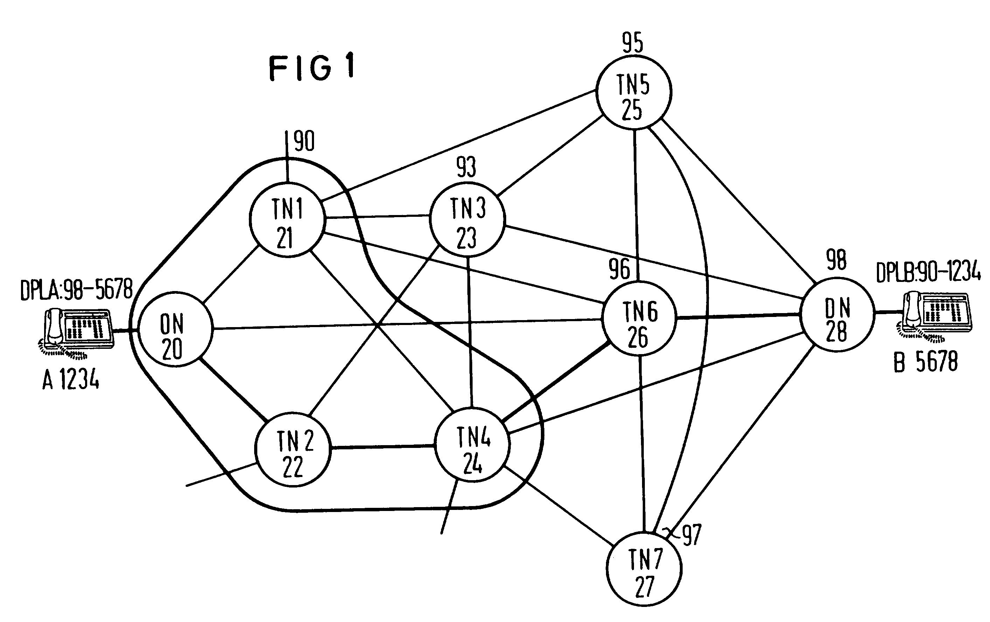

In Figur 1 ist ein vermaschtes Netz mit mehreren Knoten, mit einer sendeseitigen Fernmeldeendeinrichtung A (z.B. ein Fernsprechendgerät oder ein Faxendgerät) und mit einer empfangsseitigen Fernmeldeendeinrichtung (B) dargestellt. Hinsichtlich einer Fernmeldeverbindung, die von A nach B aufzubauen ist, haben die Netzknoten die Funktion eines Ursprungsknotens ON (Origin Node), von Durchgangs- oder Transitknoten TNx (Transit Node) und eines Zielknotens DN (Destination Node). Das Netz umfaßt beispielsweise 7 Transitknoten TN1 ... TN7, die wie in Figur 1 angegeben, miteinander verbunden sind. Damit läßt sich eine Fernmeldeverbindung zwischen A und B auf verschiedenen Wegen herstellen: beispielsweise auf dem Weg ON-TN6-DN, ON-TN2-TN4-DN und ON-TN2-TN3-TN5-TN7-TN6-DN.

Den Knoten ON, TN1, ... TN7, DN sind individuelle Knotennummern 20, ... 28 zugeordnet. Die Knoten ON (20), TN1 (21), TN2 (22) und TN4 (24) sind in einem Bereich verdeckter Numerierung angeordnet. Diesem Bereich ist die Kennzahl 90 zugeordnet. In den übrigen Netzknoten TN3 (23), TN5 (25), TN6 (26), TN7 (27) und DN (28) werden Rufnummern offen numeriert. Diesen Knoten sind die individuellen Kennzahlen 93, 95, 96, 97 und 98 zugeordnet.

In Figur 1 sind die Knotennummern in den die Knoten symbolisch darstellenden Kreisen unterhalb der Knotennamen ON, TN1, ... TN7, DN angegeben. Die Bereichskennzahl 90 ist oberhalb der Linie angegeben, die den Bereich symbolisch darstellt; die Knotenkennzahlen 93, 95, ... sind oberhalb der die Knoten darstellenden Kreise angegeben.

Der Begriff der "Knotennummer" bezeichnet ein netzweit festgelegtes betriebstechnisches Datum. Während die Ursprungsknotennummer im knotenübergreifenden Verkehr übertragen wird, werden die Knotennummern der übrigen, am Verbindungsaufbau beteiligten Knoten nicht übertragen. Diese Knotennummern können im Zusammenhang mit dem erfindungsgemäßen Verfahren für noch zu beschreibende knoteninterne Prüfungen verwendet werden. Der Begriff der "Kennzahl" bezeichnet demgegenüber eine Wählziffer bzw. eine Wählziffernkombination, die im knotenübergreifenden Verkehr mit offener Numerierung zu wählen ist und der eigentlichen Endeinrichtungsrufnummer vorangestellt ist. Die beim erfindungsgemäßen Verfahren vorgenommenen Prüfungen in den am Verbindungsaufbau beteiligten Knoten können anhand der jeweils verfügbaren Kennzahlen und/oder Knotennummern abhängig vom verwendeten Netzprotokoll und dem Steuerungsprogramm der Netzknotensteuerungen erfolgen.

Es wird nun davon ausgegangen, daß eine Fernmeldeverbindung von A über die Knoten ON (20), TN2 (22), TN4 (24), TN6 (26), DN (28) zu B aufgebaut wird. Die Rufnummer von A sei 1234 und die Rufnummer von B sei 5678; der Zielknoten DN habe die Knotenkennzahl 98. Die Knoten ON (20), TN2 (22) und TN4 (24) sind in einem Bereich verdeckter Numerierung angeordnet, dem die Bereichskennzahl 90 zugeordnet ist. Dem verbleibenden am Verbindungsaufbau beteiligten Knoten DN ist die Knotenkennzahl 98 zugeordnet.

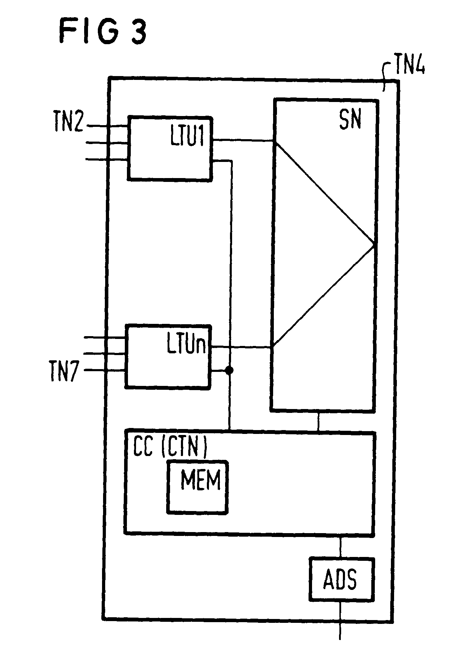

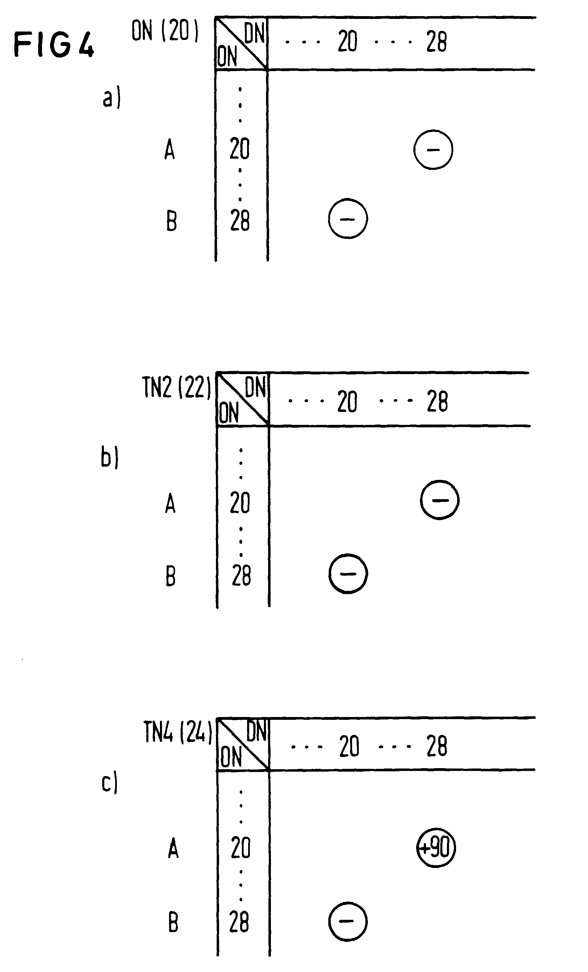

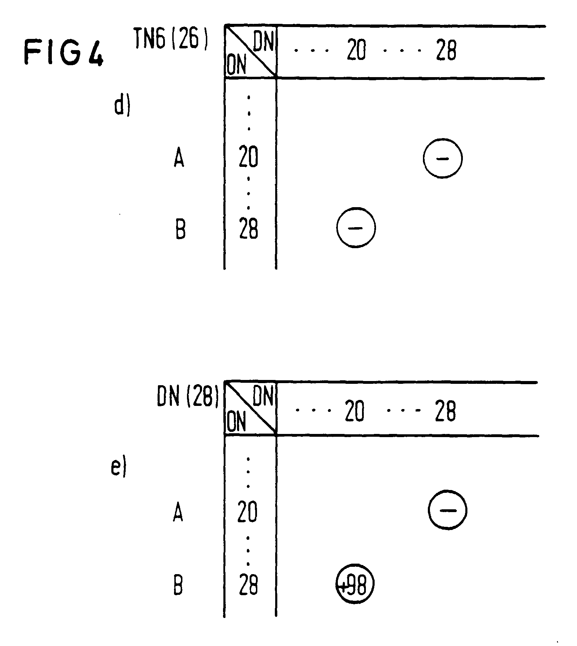

Zur Anwahl von B werden in die Endeinrichtung A die Wählziffern 98 5678 eingegeben. In die Signalisierungsinformation der aufzubauenden Fernmeldeverbindung wird in an sich bekannter Weise neben der A-Rufnummer (1234), die Ursprungsknotennummer (20) und die gewählte B-Rufnummer einschließlich der (Ziel-) Knotenkennzah 1 (98 5678) eingefügt.
In jedem am Verbindungsaufbau beteiligten Knoten wird nun geprüft, ob und gegebenenfalls in welcher Weise die A-Rufnummer (1234) zu modifizieren ist. Diese Prüfung erfolgt anhand der Ursprungsknotennummer (20) sowie anhand der (Ziel-) Knotenkennzahl (98). In den Netzknoten ist die Zuordnung von (Ziel-) Knotenkennzahlen und Zielknotennummern abgespeichert. Der erste am Verbindungsaufbau beteiligte Netzknoten ist der Ursprungsknoten (ON), der in einem Bereich verdeckter Numerierung angeordnet ist. Die Steuerung des Ursprungsknotens (CTN, vgl. Figur 3) bildet zunächst aus der (Ziel-) Knotenkennzahl (98) die Zielknotennummer (28) und greift dann auf eine im Knoten abgespeicherte Rufnummer-Modifikationstabelle (Figur 4a) zu. Diese Tabelle gibt in Abhängigkeit der Ursprungsknotennummer (hier 20) und in Abhängigkeit der Zielknotennummer (hier 28) an, ob und gegebenenfalls in welcher Weise die A-Rufnummer (vgl. Anspruch 1) bzw. die B-Rufnummer (Ursprungsknotennummer 28 und Zielknotennummer 20, vgl. Anspruch 2) zu modifizieren ist. Im vorliegenden Fall ergibt die für die A-Rufnummer vorgenommene Prüfung, daß die A-Rufnummer wegen der Anordnung des Ursprungsknotens in einem Bereich verdeckter Numerierung nicht zu modifizieren ist (Figur 4a: Zeile "20", Spalte "28").

Die Fernmeldeverbindung wird nun vom Ursprungsknoten "20" zum Transitknoten "22" geführt. Der Transitknoten "22" ist wie der Ursprungsknoten im selben Bereich verdeckter Numerierung angeordnet, er ist auch einem Bereich bzw. Knoten offener Numerierung nicht benachbart. Die Rufnummer-Modifikationstabelle ist daher für diesen Knoten "22" wie für den Knoten "20" konfiguriert, wie nachstehend beschrieben wird. Die Steuerung dieses Knotens (CTN, vgl. Figur 3) bildet wie schon die Steuerung des Ursprungsknotens aus der (Ziel-) Knotenkennzahl (98) die Zielknotennummer (28) und greift auf die im Knoten abgespeicherte Rufnummer-Modifikationstabelle (Figur 4b) zu. Im vorliegenden Fall ergibt die für die A-Rufnummer vorgenommene Prüfung, daß die A-Rufnummer ebenfalls nicht zu modifizieren ist (Figur 4b: Zeile "20", Spalte "28"). Die Signalisierungsinformation erfährt also am Ausgang des Bereichs verdeckter Numerierung keine Modifikation; die A-Rufnummer 1234 wird weder ergänzt noch verkürzt.

Die Fernmeldeverbindung wird nun zum Transitknoten "24" geführt. Der Transitknoten "24" ist wie der Ursprungsknoten "20" und der Transitknoten "22" im selben Bereich verdeckter Numerierung angeordnet, er ist allerdings - anders als die Knoten "20" und "22" - auch einem Bereich bzw. Knoten TN6 offener Numerierung benachbart. Die Rufnummer-Modifikationstabelle ist aus diesem Grund für diesen Knoten "24" anders konfiguriert als die entsprechenden Tabellen in den Knoten "20" und "22", wie nachstehend beschrieben wird. Die Steuerung dieses Knotens (CTN, vgl. Figur 3) bildet wie schon die Steuerung des Ursprungsknotens "20" bzw. des Transitknotens "22" aus der (Ziel-) Knotenkennzahl (98) die Zielknotennummer (28) und greift auf die im Knoten abgespeicherte Rufnummer-Modifikationstabelle (Figur 4c) zu. Im vorliegenden Fall ergibt die für die A-Rufnummer vorgenommene Prüfung, daß die A-Rufnummer zu modifizieren ist, nämlich um die Bereichskennzahl "90", die zu ergänzen ("+") ist (Figur 4c: Zeile "20", Spalte "28"). Die Signalisierungsinformation erfährt also am Ausgang des Bereichs verdeckter Numerierung eine Modifikation; die A-Rufnummer 1234 wird um die Kennzahl "90" des Bereichs verdeckter Numerierung ergänzt.

Die übrigen am Verbindungsaufbau beteiligten Knoten TN6 und DN sind Knoten offener Signalisierung. Die diesen Knoten zugeordneten Rufnummer-Modifikationstabellen (Figuren 4d und 4e sind in der Weise konfiguriert, daß die A-Rufnummer nicht modifiziert wird.
Die jeweilige Steuerung CTN (vgl. Figur 3) des Knotens TN6 bzw. DN führt also die entsprechenden Prüfungen mit dem Ergebnis durch, daß die in der Signalisierungsinformation enthaltene A-Rufnummer 1234, die bereits um die Bereichskennzahl "90" ergänzt ist, nicht durch die jeweilige Knotenkennzahl "96" bzw. "98" ergänzt wird. Der empfangsseitigen Fernmeldeendeinrichtung B wird also die nur um die Bereichskennzahl "90" ergänzte A-Rufnummer 1234 zugeführt, wo sie zur Anzeige auf einem Display DPLB bzw. für die Realisierung anderer Leistungsmerkmale zur Verfügung steht. Die A-Rufnummer wird also der empfangsseitigen Endeinrichtung unabhängig von den durchlaufenden Knoten offener Numerierung zur Verfügung gestellt.

Die Rücksignalisierung der B-Rufnummer von der Endeinrichtung B zur Endeinrichtung A erfolgt in analoger Weise, wobei zu beachten ist, daß der "Zielknoten" (28) des Verbindungsaufbaus gleich dem "Ursprungsknoten" (28) der Rücksignalisierung ist und daß der "Ursprungsknoten" (20) des Verbindungsaufbaus gleich dem "Zielknoten" (20) der Rücksignalisierung ist. Die Rücksignalisierung erfolgt über die am Verbindungsaufbau beteiligten Knoten (20-22-24-26-28), allerdings in umgekehrter Reihenfolge (28-26-24-22-20). Die Steuerung der an der Rücksignalisierung beteiligten Knoten führen die im Zusammenhang mit dem Verbindungsaufbau beschriebenen Prüfungen durch und greifen jeweils auf die in den Knoten abgespeicherten Rufnummer-Modifikationstabellen zu (Figuren 4d, 4c, 4b und 4a: Zeile "28", Spalte "20"). Damit ergibt sich, daß die in der (Rück-) Signalisierungsinformation enthaltene B-Rufnummer nur im Knoten "28" um die Knotenkennzahl "98" ergänzt wird. Der sendeseitigen Fernmeldeendeinrichtung A wird also die nur um die Knotenkennzahl "98" ergänzte B-Rufnummer 5678 zugeführt, wo sie zur Anzeige auf einem Display DPLA bzw. für die Realisierung anderer Leistungsmerkmale zur Verfügung steht. Die B-Rufnummer wird also der sendeseitigen Endeinrichtung unabhängig von dem tatsächlich zurückgelegten Weg zur Verfügung gestellt.

Bei den Knoten handelt es sich insbesodere um Kommunikationssysteme, die in den veröffentlichten europäischen Patentanmeldungen EP 0306693 Al (US-PS 4,903,258), EP 0303870 A2 (US-PS 5,018,097) und EP 0303869 Al (US-PS 5,047,923) offenbart sind. In Figur 3 sind lediglich die für das Verständnis der Erfindung erforderlichen Komponenten des Kommunikationssystems dargestellt: Dieses umfaßt eine Steuerung CC (CTN), ein Koppelnetz SN sowie Anschlußeinheiten LTU1 ... LTUn. Diese Anschlußeinheiten umfassen Teilnehmeranschlußschaltungen und Leitungssatzschaltungen. Die Teilnehmeranschlußschaltungen sind teilnehmerorientierte Geräteanschlüsse wie beispielsweise ISDN-Basisanschlüsse für digitale mono- und multifunktionale Endgeräte. Die Leitungssatzschaltungen dienen zur Verbindung mit öffentlichen und/oder privaten Netzen und sind beispielsweise ISDN-Basisanschlüsse für ISDN-Amtsverkehr und ISDN-Querverkehr.

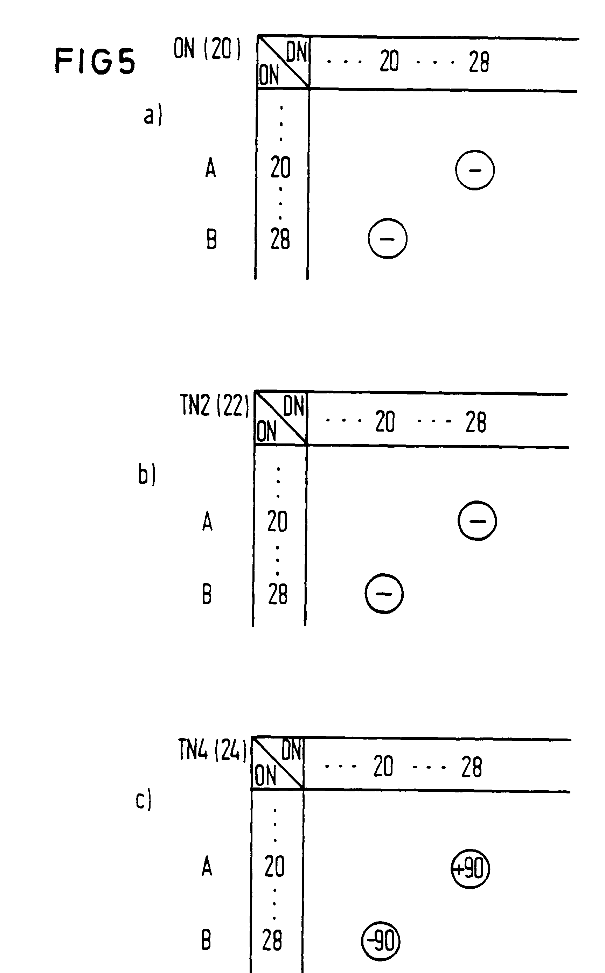

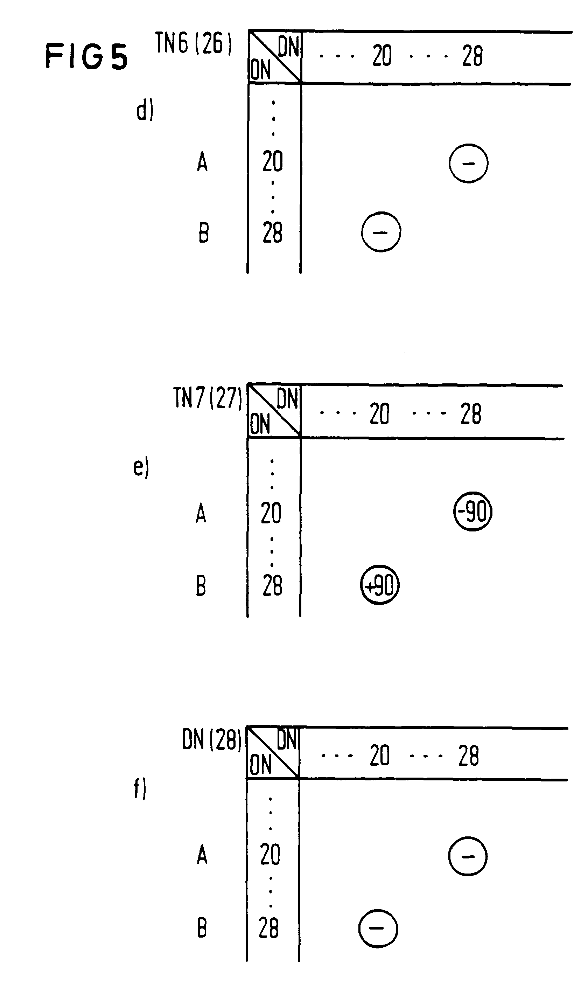

Die Teilnehmeranschluß- und Leitungssatzschaltungen haben die gleichen systeminternen Schnittstellen. Sie koppeln die einzelnen Basiskanäle, auf denen Nutzdaten, d.h. Sprach- und/oder Dateninformationen übertragen werden, an eine beliebige Auswahl aus 2 Multiplexkanälen mit beispielsweise 32 Kanälen des Koppelnetzes SN und übergeben die in einen Steuerkanal übertragenen Signalisierungsinformationen als HDLC-Protokoll an die Steuerung CC (CTN). Dieser Steuerung ist ein Speicher MEM zugeordnet, in dem die in den Figuren 4 und 5 angegebenen Tabelleninformationen abgespeichert sind. Die Tabelleninformationen sind insbesondere über betriebstechnische Befehle, die in eine betriebstechnische Einheit ADS einzugeben sind, konfigurierbar. Das in Figur 3 dargestellte Kommunikationssystem, das beispielsweise den Knoten TN4 bildet, stellt u.a. Verbindungen zu benachbarten Knoten, beispielsweise zu den Knoten TN2 und TN7, her.

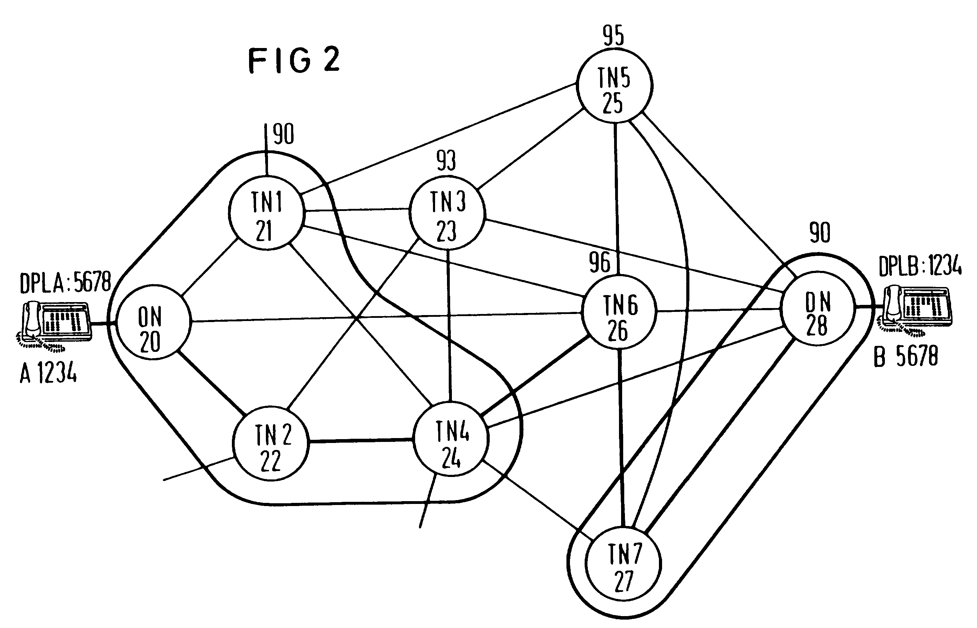

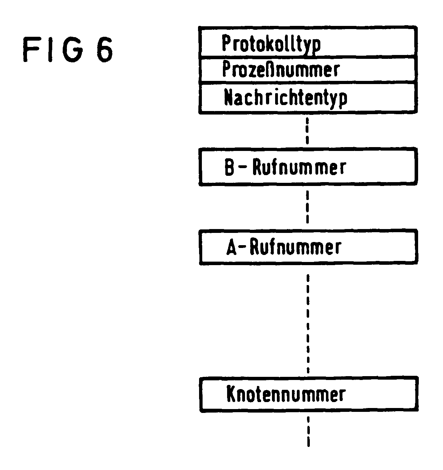

Die in den Figuren 1 und 2 dargestellten vermaschten Netze können beispielsweise Netze sein, für das das bekannte CorNet-Protokoll implementiert ist (Siemens Aktiengesellschaft Private Communication Systems and Networks Division: "CorNet Signalling for ISDN Communication in Corporate Networks", Ordering No. A19100-K3110-G284-X-7600, Berlin and Munich 1987; "CorNet functional specification"). Die Verbindungsaufbaunachricht ("Setup message") kann dabei wie in Figur 6 strukturiert sein. Diese Nachricht besteht dabei aus den folgenden Informationselementen: Protocol discriminator, Call reference, Message type, ... Called party number, ... Calling party number, ... Transit counter, ... Equipment identification ...

Das Informationselement "Protocol discriminator" gibt den Protokolltyp, z.B. CorNetN an; "Call reference" bezeichnet eine laufende Prozeßnummer und "Message type" bezeichnet die Art der Signalisierungsnachricht, hier: "Verbindungsaufbau" (Setup).

Die "Called party number" (B-Rufnummer) enthält neben der eigentlichen Rufnummer die Kennzahl (z. B. 98), die dem Zielknoten DN (28) zugeordnet ist.

Das Informationselement "Calling party number" bezeichnet die A-Rufnummer, die bei Rufnummernsignalisierung in offener Numerierung um die dem Ursprungsknoten zugeordnete Kennzahl ergänzt ist. Sofern bei dem erfindungsgemäßen Verfahren in der Signalisierungsinformation nicht die Ursprungsknotennummer enthalten ist bzw. von einer Netzknotensteuerung nicht ausgewertet werden kann, wertet diese bei der Auswertung der Tabellen nach den Figuren 4 und 5 die Ursprungsknotenkennzahl in die Ursprungsknotennummer um.

Das Informationselement "Equipment identification" bezeichnet die Knotennummer (20) des Ursprungsknotens. Ferner kann ein Informationselement "Called party number" vorgesehen sein. Dieses wird in die Rückmeldung("Alert", "zweite Signalisierungsinformation") eingefügt, wenn die Verbindung zu B bzw. (z. B. im Fall der Anrufumleitung) zu einer anderen empfangsseitigen Fernmeldeendeinrichtung aufgebaut worden ist. Das Informationselement bezeichnet die Rufnummer von B bzw. der anderen empfangsseitigen Endeinrichtung.

Figur 2 zeigt das bereits in Figur 1 dargestellte Netz mit der Besonderheit, daß der Ursprungsknoten (20) und der Zielknoten (28) in einem Bereich derselben Kennzahl (hier 90) angeordnet sind, wobei allerdings ein Bereich einer anderen Kennzahl (hier 96) zwischen Ursprungsknoten und Zielknoten auf der Verbindungsaufbaustrecke angeordnet ist.

Es wird davon ausgegangen, daß die Verbindung von A über die Knoten ON (20), TN2 (22), TN4 (24), TN6 (26), TN7 (27) und DN (28) zu B geführt wird. Bei dem in Figur 2 dargestellten Netz sind die Knoten ON (20), TN1 (21), TN2 (22) und auch die Knoten TN7 (27) und DN (28) im Bereich mit der Kennzahl "90" angeordnet. Die Knoten TN3 (23), TN5 (25) und TN6 (26) sind Knoten offener Numerierung; ihnen sind die individuellen Knotenkennzahlen 93, 95 und 96 zugeordnet.
In Figur 5 a), b), c), d), e) und f) sind die Rufnummer-Modifikationstabellen für die Knoten ON (20), TN2 (22), TN4 (24), TN6 (26), TN7 (27) und DN (28) dargestellt. Die Modifikation der A-Rufnummer in den Knoten ON (20), TN2 (22), TN4 (24) und TN6 (26) erfolgt wie zuvor anhand der Figuren 1 und 4 a), b), c), d) beschrieben: danach wird die A-Rufnummer 1234 zunächst nur in dem Knoten TN4, der im Bereich verdeckter Numerierung angeordnet und zugleich einem Knoten (TN6) offener Numerierung benachbart ist, modifiziert, nämlich um die Bereichskennzahl "90" ergänzt (Figur 5c, Zeile "20", Spalte "28": "+90").

Es wird nun davon ausgegangen, daß die Signalisierungsinformation der aufzubauenden Fernmeldeverbindung, die die um die Bereichskennzahl "90" ergänzte A-Rufnummer 1234 enthält, vom Transitknoten TN6 zum Transitknoten TN7 geführt wird. Dieser Knoten liegt gemeinsam mit dem nachgeordneten Zielknoten DN (28) in dem Bereich, dem die gleiche Kennzahl "90" zugeordnet ist, ebenso wie dem Ursprungsknoten (20). Der Knoten TN7 ist zudem einem Knoten (TN6) offener Numerierung benachbart. Die dem Knoten TN7 zugeordnete Rufnummer-Modifikationstabelle ist in Figur 5e) dargestellt. Im Kreuzungspunkt der Zeile (ON=) "20" und der Spalte (DN=) "28" ist der Rufnummernmodifikationswert "-90" angegeben. Damit wird die in der Signalisierungsinformation enthaltene, ursprünglich um die Bereichskennzahl "90" ergänzte A-Rufnummer 1234 um diese Bereichskennzahl "90" gekürzt. Im Zielknoten DN (28) wird die A-Rufnummer nicht modifiziert (Figur 5f, Zeile "20", Spalte "28").

Der empfangsseitigen Fernmeldeendeinrichtung B wird also die schließlich durch Ergänzung und Kürzung derselben Bereichskennzahl "90" unveränderte A-Rufnummer 1234 zugeführt, wo sie zur Anzeige auf dem Display DPLB bzw. für die Realisierung anderer Leistungsmerkmale zur Verfügung steht. Die A-Rufnummer wird also der empfangsseitigen Endeinrichtung unabhängig von den durchlaufenden Knoten offener Numerierung zur Verfügung gestellt.

Die Rücksignalisierung der B-Rufnummer von der Endeinrichtung B zur Endeinrichtung A erfolgt in analoger Weise, wobei wiederum zu beachten ist, daß der "Zielknoten" (28) des Verbindungsaufbaus gleich dem "Ursprungsknoten" (28) der Rücksignalisierung ist und daß der "Ursprungsknoten" (28) des Verbindungsaufbaus gleich dem "Zielknoten" (20) der Rücksignalisierung ist. Die Rücksignalisierung erfolgt über die am Verbindungsaufbau beteiligten Knoten (20-22-24-26-27-28), allerdings in umgekehrter Reihenfolge (28-27-26-24-22-20). Die Steuerung der an der Rücksignalisierung beteiligten Knoten führen die im Zusammenhang mit dem Verbindungsaufbau beschriebenen Prüfungen durch und greifen jeweils auf die in den Knoten abgespeicherten Rufnummer-Modifikationstabellen zu (Figuren 5f, 5e, 5d, 5c, 5b und 5a: Zeile "28", Spalte "20"). Damit ergibt sich, daß die in der (Rück-) Signalisierungsinformation enthaltene B-Rufnummer im Knoten TN7 (27) um die Bereichskennzahl "90" verkürzt wird. Beide Knoten TN7 und TN4 liegen in einem Bereich verdeckter Numerierung und sind auf der "gehenden" Seite (TN7) bzw. auf der "kommenden" Seite (TN4) Knoten offener Numerierung benachbart. Dies ist hier derselbe Knoten TN6.
Der sendeseitigen Fernmeldeendeinrichtung A wird also die durch Ergänzung und Kürzung derselben Bereichskennzahl "90" schließlich unveränderte B-Rufnummer 5678 zugeführt, wo sie zur Anzeige auf dem Display DPLA bzw. für die Realisierung anderer Leistungsmerkmale zur Verfügung steht. Die B-Rufnummer wird also der sendeseitigen Endeinrichtung unabhängig von dem tatsächlich zurückgelegten Weg zur Verfügung gestellt.

## Patentansprüche

1. Verfahren zur Rufnummernsignalisierung in einem Fernmeldenetz, wobei Fernmeldeverbindungen von einer sendeseitigen Fernmeldeendeinrichtung (A) über einen Ursprungsknoten (ON), über Transitknoten (TN1, ... TN7) zu einer empfangsseitigen Fernmeldeendeinrichtung (B) gelenkt werden, wobei der Ursprungsknoten (ON) in einem Bereich verdeckter Numerierung angeordnet ist, wobei in eine erste Signalisierungsinformation der aufzubauenden Fernmeldeverbindung eine den Ursprungsknoten (ON) bezeichnende Knotennummer, die Rufnummer der sendeseitigen Fernmeldeendeinrichtung (A), eine der empfangsseitigen Fernmeldeendeinrichtung (B) zugeordnete, in die sendeseitige Fernmeldeendeinrichtung (A) eingegebene Knotenkennzahl und die (B-) Rufnummer eingefügt werden,
**dadurch gekennzeichnet**,
daß in am Verbindungsaufbau beteiligten Knoten (ON, TN1, ... DN) anhand der Knotennummer des Ursprungsknotens (ON) und anhand der Kennzahl des Zielknotens (DN) geprüft wird, ob die Rufnummer der sendeseitigen Fernmeldeendeinrichtung (A) zu modifizieren ist, daß die Rufnummer der sendeseitigen Fernmeldeendeinrichtung (A) in einem Knoten (TN4) im Bereich verdeckter Numerierung, welcher einem Bereich offener Numerierung benachbart ist, um die den Bereich verdeckter Numerierung bezeichnende Kennzahl ergänzt und in den dem Bereich verdeckter Numerierung nachgeordneten Knoten (DN, TN6) offener Numerierung nicht um die diese Knoten (DN, TN6) bezeichnende Kennzahlen ergänzt wird.

2. Verfahren nach Anspruch 1,
**dadurch gekennzeichnet,**
daß nach dem Aufbau der Fernmeldeverbindung von der sendeseitigen Fernmeldeendeinrichtung (A) zur empfangsseitigen Fernmeldeendeinrichtung (B) eine zweite Signalisierungsinformation gebildet wird, die von der empfangsseitigen zur sendeseitigen Fernmeldeendeinrichtung (B, A) mit der Rufnummer der empfangsseitigen Fernmeldeendeinrichtung (B) übertragen wird, daß in den am Verbindungsaufbau beteiligten Knoten (DN, TN7, ... ON) anhand der Kennzahl des Zielknotens (DN) und anhand der Knotennummer des Ursprungsknotens (ON) geprüft wird, ob die Rufnummer der empfangsseitigen Fernmeldeendeinrichtung (B) zu modifizieren ist, daß die Rufnummer der empfangsseitigen Fernmeldeendeinrichtung (B) in dem den für die zweite Signalisierungsinformation darstellenden Ursprungsknoten (DN), sofern dieser Knoten (DN) ein Knoten offener Numerierung ist, um die diesen Knoten (DN) bezeichnende Kennzahl ergänzt und in den diesem Knoten (DN) bezüglich der zweiten Signalisierungsinformation nachgeordneten Knoten (TN7, ... ON) nicht ergänzt wird.

3. Verfahren nach einem der vorstehenden Ansprüche,
**dadurch gekennzeichnet**,
daß die erste Signalisierungsinformation mit der um die Bereichskennzahl des Ursprungsknotens (ON) ergänzten Rufnummer der sendeseitigen Fernmeldeendeinrichtung (A), sofern der Ursprungsknoten (ON) und der Zielknoten (DN) einem Bereich derselben Kennzahl zugeordnet sind und sofern zwischen beiden Knoten (ON, DN) mindestens ein Bereich anderer Kennzahl angeordnet ist, im Zielknoten (DN), oder in einem dem Zielknoten (DN) vorgeordneten, dem Bereich des Zielknotens (DN) zugeordneten Knoten (TN7) um die Bereichskennzahl des Ursprungsknotens (ON) gekürzt wird.

4. Verfahren nach Anspruch 3,
**dadurch gekennzeichnet**,
daß nach dem Aufbau der Fernmeldeverbindung von der sendeseitigen Fernmeldeendeinrichtung (A) zur empfangsseitigen Fernmeldeendeinrichtung (B) die zweite Signalisierungsinformation in den am Verbindungsaufbau beteiligten Knoten (DN, TN7, ... ON) anhand der Kennzahl des Zielknotens (DN) und anhand der Knotennummer des Ursprungsknotens (ON) geprüft wird, ob die Rufnummer der ursprünglich empfangsseitigen Fernmeldeendeinrichtung (B) zu modifizieren ist, daß die Rufnummer der sendeseitigen Fernmeldeendeinrichtung (B) bei der Übertragung der zweiten Signalisierungsinformation in der Weise modifiziert wird, daß die Rufnummern der sendeseitigen Fernmeldeendeinrichtung (B) ohne Kürzungen oder Ergänzungen zu der empfangsseitigen Fernmeldeendeinrichtung (A) geführt wird.

## Claims

1. Process for signalling the call number in a telecommunication network, telecommunication connections being directed from telecommunication terminal equipment on the transmission side (A) via an origin node (ON), via transit nodes (TN1, ... TN7) to telecommunication terminal equipment on the reception side (B), the origin node (ON) being arranged in an area of closed numbering and there being inserted into first signalling information of the telecommunication connection to be set up a node number designating the origin node (ON), the call number of the telecommunication terminal equipment on the transmission side (A), a node identity number, assigned to the telecommunication terminal equipment on the reception side (B) and entered into the telecommunication terminal equipment on the transmission side (A), and the (B) call number, characterized in that in nodes (ON, TN1, ... DN) involved in the setup of the connection it is checked on the basis of the node number (KON) of the origin node (ON) and on the basis of the identity number (KDN) of the destination node (DN) whether the call number of the telecommunication terminal equipment on the transmission side (A) is to be modified, and in that the call number of the telecommunication terminal equipment on the transmission side (A) is supplemented in a node (TN4) in the area of closed numbering which neighbours an area of open numbering by the identity number designating the area of closed numbering and is not supplemented in the nodes (DN) of open numbering following the area of closed numbering by the identity numbers designating these nodes (DN, TN6).

2. Process according to Claim 1, characterized in that, after the setup of the telecommunication connection from the telecommunication terminal equipment on the transmission side (A) to the telecommunication terminal equipment on the reception side (B), second signalling information is formed, which is transmitted from the telecommunication terminal equipment on the reception side (B) to that on the transmission side (A) with the call number of the telecommunication terminal equipment on the reception side (B), in that in the nodes (DN, TN7, ... ON) involved in the setup of the connection it is checked on the basis of the identity number (KDN) of the destination node (DN) and on the basis of the node number of the origin node (ON) whether the call number of the telecommunication terminal equipment on the reception side (B) is to be modified, and in that the call number of the telecommunication terminal equipment on the reception side (B) is supplemented in the destination node (DN), representing the second signalling information, provided that this node (DN) is a node of open numbering, by the identity number (KDN) designating this node (DN) and is not supplemented in the nodes (TN7 ... ON) following this node (DN) with respect to the second signalling information.

3. Process according to one of the preceding claims, characterized in that, provided that the origin node (ON) and the destination node (DN) are assigned to an area of the same identity number and provided that there is at least one area of another identity number arranged between the two nodes (ON, DN), the first signalling information with the call number of the telecommunication terminal equipment on the transmission side (A), supplemented by the area identity number of the origin node (ON), is abbreviated in the destination node (DN), or in a node (TN7) preceding the destination node (DN) and assigned to the area of the destination node (DN), by the area identity number of the origin node (ON).

4. Process according to Claim 3, characterized in that, after the setup of the telecommunication connection from the telecommunication terminal equipment on the transmission side (A) to the telecommunication terminal equipment on the reception side (B), the second signalling information is checked in the nodes (DN, TN7, ... ON) involved in the setup of the connection on the basis of the identity number of the destination node (DN) and on the basis of the node number of the origin node (ON) to ascertain whether the call number of the telecommunication terminal equipment originally on the reception side (B) is to be modified, and in that the call number of the telecommunication terminal equipment on the transmission side (B) is modified in the transmission of the second signalling information in such a way that the call number of the telecommunication terminal equipment on the transmission side (B) is routed to the telecommunication terminal equipment on the reception side (A) without abbreviations or supplements.

## Revendications

1. Procédé de signalisation de numéros d'appel dans un réseau de télécommunication, dans lequel on achemine des liaisons de télécommunication d'un terminal (A) de télécommunication émetteur à un terminal (B) de télécommunication récepteur par l'intermédiaire d'un noeud (ON) d'origine, de noeuds (TN1 à TN7) de transit, le noeud (ON) d'origine se trouvant dans une zone à numérotation fermée, dans lequel on insère dans une première information de signalisation de la liaison de télécommunication à établir, un numéro de noeud désignant le noeud (ON) d'origine, le numéro d'appel du terminal (A) de télécommunication émetteur, un nombre caractéristique de noeud associé au terminal (B) de télécommunication récepteur et introduit dans le terminal (A) de télécommunication émetteur, et le numéro d'appel (B),
caractérisé en ce que
on vérifie, dans des noeuds (ON, TN1, ... DN) participant à l'établissement de la liaison, sur la base du numéro du noeud (ON) d'origine et sur la base du nombre caractéristique du noeud (DN) de destination, s'il faut modifier le numéro d'appel du terminal (A) de télécommunication émetteur, on complète le numéro d'appel du terminal (A) de télécommunication émetteur dans un noeud (TN4) dans la zone à numérotation fermée, qui est voisine d'une zone à numérotation ouverte, par le nombre caractéristique désignant la zone à numérotation fermée et on ne le complète pas, dans les noeuds (DN, TN6) à numérotation ouverte, qui sont en aval de la zone à numérotation fermée, par les nombres caractéristiques désignant ces noeuds (DN, TN6).

2. Procédé suivant la revendication 1,
caractérisé en ce que
on forme, après l'établissement de la liaison de télécommunication du terminal (A) de télécommunication émetteur au terminal (B) de télécommunication récepteur, une seconde information de signalisation, que l'on transmet du terminal (B) de télécommunication récepteur au terminal (A) de télécommunication émetteur avec le numéro d'appel du terminal (B) de télécommunication récepteur, on vérifie, dans les noeuds (DN, TN7, ... ON) ayant participé à l'établissement de la liaison, sur la base du nombre caractéristique du noeud (DN) de destination et sur la base du numéro du noeud (ON) d'origine, s'il faut modifier le numéro d'appel du terminal (B) de télécommunication récepteur, on complète le numéro d'appel du terminal (B) de télécommunication récepteur, dans le noeud (DN) d'origine représentatif de la seconde information de signalisation, dans la mesure où ce noeud (DN) est un noeud à numérotation ouverte, par le nombre caractéristique désignant ce noeud (DN) et on ne le complète pas dans les noeuds (TN7, ... ON) qui sont en aval de ce noeud (DN) du point de vue de la seconde information de signalisation.

3. Procédé suivant l'une des revendications précédentes,
caractérisé en ce que
on enlève de la première information de signalisation ayant le numéro d'appel du terminal (A) de télécommunication émetteur complété par le nombre caractéristique de zone du noeud (ON) d'origine, dans la mesure où le noeud (ON) d'origine et le noeud (DN) de destination sont associés à une zone de même nombre caractéristique et dans la mesure où il se trouve entre les deux noeuds (ON, DN) au moins une zone ayant un autre nombre caractéristique, dans le noeud (DN) de destination ou dans un noeud (TN7) en amont du noeud (DN) de destination et associé à la zone du noeud (DN) de destination, le nombre caractéristique de zone du noeud (ON) d'origine.

4. Procédé suivant la revendication 3,
caractérisé en ce que
on vérifie, après l'établissement de la liaison de télécommunication du terminal (A) de télécommunication émetteur au terminal (B) de télécommunication récepteur, la seconde information de signalisation dans les noeuds (DN, TN7, ... ON) participant à l'établissement de la liaison, sur la base du nombre caractéristique du noeud (DN) de destination et sur la base du numéro du noeud (ON) d'origine, s'il faut modifier le numéro d'appel du terminal (B) de télécommunication récepteur à l'origine, on modifie le numéro d'appel du terminal (B) de télécommunication émetteur lors de la transmission de la seconde information de signalisation, de telle sorte que le numéro d'appel du terminal (B) de télécommunication émetteur soit mené sans réduction ni complément au terminal (A) de télécommunication récepteur.
